# FASCICULE DE BREVET EUROPEEN

(11) **EP 3 391 387 B1**
(45) Date de publication et mention de la délivrance du brevet: **25.08.2021**
(21) Numéro de dépôt: 16825527.1
(22) Date de dépôt: 15.12.2016
(51) Int. Cl.: H01B 3/30, H01B 3/46, H01B 3/44, C08L 23/14

(54) **CÂBLE ÉLECTRIQUE À MOYENNE OU HAUTE TENSION**
ELEKTRISCHE MITTEL- ODER HOCHSPANNUNGSLEITUNG
MEDIUM OR HIGH VOLTAGE ELECTRICAL CABLE

(30) Priorité: 18.12.2015 FR 1562775
(43) Date de publication de la demande: 24.10.2018
(73) Titulaire: Nexans, 92400 Courbevoie (FR)
(72) Inventeur: PEREGO, Gabriele, 20144 Milan (IT); MAZEL, Christelle, 38300 Ruy (FR); MEYER, Matthias, 23552 Lübeck (DE); CHARRIER, Dimitri, 69130 Ecully (FR); FESTAZ, Xavier, 01800 Villieu-Loyes-Mollon (FR)
(74) Mandataire: Ipsilon
(86) Numéro de dépôt international: PCT/FR2016/053481
(87) Numéro de publication internationale: WO 2017/103512

(56) Documents cités:
- US-A- 6 124 770
- US-A1- 2013 233 604
- US-A1- 2014 190 723
- YIJIAN LIN ET AL: "Comparison of olefin copolymers as compatibilizers for polypropylene and high-density polyethylene", JOURNAL OF APPLIED POLYMER SCIENCE, vol. 113, no. 3, 5 août 2009 (2009-08-05), pages 1945-1952, XP055300433, US ISSN: 0021-8995, DOI: 10.1002/app.30190
- ZHOU YAO ET AL: "Evaluation of polypropylene/polyolefin elastomer blends for potential recyclable HVDC cable insulation applications", IEEE TRANSACTIONS ON DIELECTRICS AND ELECTRICAL INSULATION, IEEE SERVICE CENTER, PISCATAWAY, NJ, US, vol. 22, no. 2, 1 avril 2015 (2015-04-01), pages 673-681, XP011578147, ISSN: 1070-9878, DOI: 10.1109/TDEI.2015.7076762 [extrait le 2015-04-01]

## Description

La présente invention se rapporte à un câble électrique présentant une conductivité thermique améliorée.

Elle s'applique typiquement, mais non exclusivement, aux câbles électriques destinés au transport d'énergie, notamment aux câbles d'énergie à moyenne tension (notamment de 6 à 45-60 kV - câbles MV) ou à haute tension (notamment supérieur à 60 kV, et pouvant aller jusqu'à 500-600 kV - câbles HV), qu'ils soient à courant continu ou alternatif, dans les domaines du transport d'électricité aérien, sous-marin, terrestre, ou encore de l'aéronautique.

Un câble de transport d'énergie à moyenne ou à haute tension comprend généralement de l'intérieur vers l'extérieur :
- un élément électriquement conducteur allongé, notamment en cuivre ou en aluminium ;
- une couche semi-conductrice interne entourant ledit élément électriquement conducteur allongé ;
- une couche électriquement isolante entourant ladite couche semi-conductrice interne ;
- une couche semi-conductrice externe entourant ladite couche isolante ; et
- éventuellement une gaine de protection électriquement isolante entourant ladite couche semi-conductrice externe.

La couche électriquement isolante est une couche en un matériau polymère, généralement à base de polyéthylènes basse densité (LDPE pour « Low Density PolyEthylene » en anglais) réticulé, soit XLPE. Les propriétés des XLPE sont bien connues dans le domaine des câbles électrique, notamment du fait qu'ils sont faciles à utiliser et qu'ils présentent de bonnes propriétés diélectriques (matériaux isolants). Ils possèdent également des propriétés physico-chimiques améliorées par rapport au LDPE non réticulé, en particulier, les câbles comportant des couches isolantes à base de XLPE peuvent être utilisés jusqu'à des températures de 90°C alors que les câbles comportant une couche isolante à base de LDPE ne sont utilisables qu'à des températures inférieures, ne dépassant pas 70°C.

Cependant, les XLPE présentent un certain nombre d'inconvénients. En particulier, ces polymères ne sont pas facilement recyclables. Par ailleurs, le processus de réticulation limite la vitesse de fabrication des câbles comportant une couche isolante à base de XLPE. En effet, pour obtenir un taux de réticulation satisfaisant, il faut que le polymère puisse être porté à la température requise pour obtenir sa réticulation pendant une durée suffisamment longue. Ainsi, la vitesse de production des câbles comportant une couche isolante à base de XLPE doit être ajustée de manière à ce que le temps de passage dans le tunnel de réticulation soit assez long pour obtenir un taux de réticulation satisfaisant, ce qui représente une limite contraignante non négligeable en termes de capacité de production. De plus, les réactions de réticulation ne doivent en aucun cas avoir lieu pendant l'extrusion du matériau à base de polyéthylène de façon à éviter tout risque de formation de particules de XLPE dans l'extrudeuse (vis, collier, tête de l'extrudeuse), et qui pourraient ensuite migrer dans la couche isolante ou dans la couche de semi-conducteur du câble et y créer des défauts. En effet, la présence de particules de XLPE affecte les propriétés finales du câble dans la mesure où ces particules génèrent un manque d'homogénéité, principalement du matériau de la couche isolante ou bien à l'interface entre la couche isolante et les couche semi-conductrices. Ce phénomène est connu sous la dénomination anglaise « *scorch phenomena* » pour phénomène de grillage.

L'utilisation de matériaux à base de LDPE pour les couches isolantes de câbles est donc en principe une alternative à l'utilisation de matériaux à base de XLPE. Cependant, les matériaux à base de LDPE présentent l'inconvénient de ne pas pouvoir être utilisés à des températures supérieures à 70°C, ce qui a également pour conséquence de réduire leur capacité à transporter de l'énergie de façon à éviter toute surchauffe de la couche isolante à des températures supérieures à 70°C.

Les matériaux à base de polypropylène présentent par ailleurs de bonnes propriétés diélectriques qui sont par exemple mises à profit dans les transformateurs et dans les câbles, en particulier les câbles sous-marins comportant une couche isolante à base de polypropylène laminé sur du papier (câbles PPLP, de la dénomination anglophone « *paper laminated polypropylene* »)*.*

Par contre, dans le domaine des câbles MV et HV, l'utilisation du polypropylène comme matériau de la couche isolante n'est encore pas très répandue.

Le polypropylène est généralement caractérisé par une densité plus faible que celle du polyéthylène, cette plus faible densité étant associée à des propriétés de conductivité thermiques légèrement inférieures à celles du polyéthylène.

Cependant, le fait que la couche électriquement isolante ait une conductivité thermique élevée représente généralement un avantage lorsque les câbles d'énergie sont des câbles MV et HV dans la mesure où cela facilite l'évacuation de la chaleur générée par l'effet Joule, permettant ainsi d'augmenter la quantité d'énergie transportée, celle-ci étant fonction de la température maximale acceptable de l'élément conducteur.

La demande de brevet américain US 2014/0190723 décrit un câble HV comprenant un élément conducteur entouré, dans cet ordre, par une couche semi-conductrice interne, une couche électriquement isolante et une couche semi-conductrice externe, et dans lequel la couche électriquement isolante est un matériau polymère à base d'un polypropylène comprenant des fragments nanoscopiques de catalyseur provenant d'un système catalytique solide utilisé pour la polymérisation des monomères de propylène. Selon ce même document, la couche isolante peut en outre renfermer d'autres types de polymères parmi lesquels on peut notamment mentionner les polyéthylènes haute densité (HDPE), notamment dont la densité est supérieure à 0,945 g/cm³, ainsi que des polyéthylènes linéaires de faible densité (LLDPE), notamment ayant une densité variant entre 0,909 et 0,930 g/cm³. Il est connu que le polypropylène et le polyéthylène ne sont pas compatibles, puisque ces deux composés sont immiscibles (voir par exemple J. W. Teh, Journal of Applied Polymer Science, 1983, 28(2), 605-618). Leur association, au sein d'un même matériau, forme un composite et n'est donc, en général, pas recommandée puisque l'on observe alors une diminution des propriétés mécaniques, en particulier une diminution de l'élongation à la rupture. De plus, les inhomogénéités d'un tel matériau affectent les propriétés diélectriques des couches isolantes dans les câbles MV et HV. En particulier, ces inhomogénéités sont à l'origine du vieillissement accéléré de façon localisée du matériau constituant la couche isolante, et par conséquent, de défauts électriques prématurés du câble comportant une telle couche isolante.

Il existe donc un besoin pour un matériau isolant pouvant avantageusement être utilisé à titre de couche électriquement isolante dans des câbles MV et HV, présentant à la fois de bonnes propriétés diélectriques et de bonnes propriétés mécaniques, c'est-à-dire alliant les avantages des polyéthylènes en termes de conductivité thermique, et celles des polypropylènes en termes de propriétés mécaniques et thermiques. En particulier, les inventeurs de la présente demande se sont donné pour but de pourvoir à un câble d'énergie à moyenne tension ou à haute tension dans lequel le matériau constituant la couche isolante peut être recyclé, obtenu sans phénomène de grillage à des vitesses d'extrusion élevées et présentant en outre de bonnes propriétés de conductivité thermique, notamment à des températures supérieures à 70°C et allant jusqu'à 90°C, voire 130°C en cas de surcharge.

Ce but est atteint par le câble d'énergie qui va être décrit ci-après et qui constitue le premier objet de l'invention.

La présente invention a donc pour premier objet, un câble d'énergie à moyenne tension ou à haute tension comprenant au moins un élément conducteur électrique allongé, une première couche semi-conductrice entourant l'élément conducteur électrique allongé, une couche électriquement isolante entourant la première couche semi-conductrice, et une deuxième couche semi-conductrice entourant ladite couche électriquement isolante, ledit câble d'énergie étant caractérisé en ce que la couche électriquement isolante est au moins une couche d'un matériau polymère thermoplastique comprenant une matrice continue de polypropylène obtenu par polymérisation de type Ziegler-Natta d'au moins un homopolymère ou un copolymère de propylène, et dans laquelle est dispersé un homo- ou copolymère d'éthylène ayant une densité variant de 0,930 à 0,970 g/cm³.

Selon l'invention, on entend par matrice « continue » de polypropylène, une matrice de polypropylène formant un bloc continu dans lequel un homo- ou un copolymère d'éthylène est dispersé. En d'autres termes, la matrice de polypropylène ne présente pas de discontinuité, elle n'est pas sous la forme de plusieurs éléments distincts déconnectés.

Selon l'invention, on entend par polymère « thermoplastique », un polymère non réticulable, et par conséquent non réticulé.

En particulier, le matériau polymère ne comprend pas d'agents de réticulation, d'agents de couplage de type silane, de photo-initiateurs, de peroxydes et/ou d'additifs qui permettent une réticulation.

Le matériau polymère est de préférence recyclable.

Selon l'invention, on entend par polymérisation de type Ziegler-Natta, une polymérisation coordinative obtenue en présence d'un catalyseur de Ziegler-Natta pouvant notamment être choisi parmi les halogénures de métaux de transition, en particulier le titane, le chrome, le vanadium, et le zirconium en mélange avec des dérivés organiques de métaux autres que des métaux de transition, en particulier un alkyle d'aluminium.

Le matériau thermoplastique polymère ne comprend pas de préférence de particules de catalyseur(s), notamment sous la forme de fragments micrométriques ou sub-micrométriques à l'issue de la polymérisation de type Ziegler-Natta.

Egalement selon l'invention, lorsque l'on dit que l'homo- ou le copolymère d'éthylène est « dispersé » dans la matrice continue de polypropylène, cela signifie que ledit homo- ou copolymère d'éthylène ne forme pas un mélange intime et homogène avec la phase de polypropylène mais y est au contraire dispersé de façon homogène sous la forme de fines particules. Typiquement la taille des particules d'homo- ou de copolymère d'éthylène est de l'ordre de 1 micron à 2 microns. Par conséquent, le matériau polymère thermoplastique constituant la couche électriquement isolante est un matériau composite.

Selon une première variante, le copolymère de propylène est un copolymère hétérophasé comprenant une phase thermoplastique de type propylène et une phase élastomère de type copolymère d'éthylène et d'une oléfine a.

La phase élastomère du copolymère hétérophasé peut représenter au moins 20% en masse environ, et de préférence au moins 45% en masse environ, par rapport à la masse totale du copolymère hétérophasé.

L'oléfine α de la phase élastomère du copolymère hétérophasé peut être le propylène.

À titre d'exemple de ce type de copolymère, on peut mentionner le copolymère hétérophasé commercialisé par la société Basell Polyolefins sous la référence Adflex® Q 200 F.

Selon une deuxième variante, le copolymère de propylène est un copolymère statistique de propylène.

À titre d'exemples de copolymères (statistiques) de propylène, on peut citer les copolymères de propylène et d'oléfine, l'oléfine étant notamment choisie parmi l'éthylène et une oléfine α différente du propylène.

L'oléfine α différente du propylène peut répondre à la formule cH₂=cH-R¹, dans laquelle R¹ est un groupe alkyle linéaire ou ramifié ayant de 2 à 10 atomes de carbone, notamment choisi parmi les oléfines suivantes : 1-butène, 1-pentène ; 4-méthyl-1-pentène, 1-hexène, 1-octène, 1-décène, 1-dodécène, et un de leurs mélanges.

L'oléfine α du copolymère de propylène et d'oléfine αreprésente de préférence au plus 15 % en mole environ et de préférence encore au plus 10 % en mole environ du copolymère.

Les copolymères de propylène et d'éthylène sont préférés à titre de copolymère de propylène.

Parmi les polypropylènes utilisables selon l'invention, on préfère tout particulièrement le copolymère statistique de propylène commercialisé par la société Borealis sous la référence Bormed® RB 845 MO.

Les homopolymères de propylène utilisables selon l'invention ont de préférence un module élastique allant de 1250 à 1600 MPa environ. Les copolymères de propylène utilisables selon l'invention (notamment les copolymères de propylène de la deuxième variante) ont de préférence un module élastique allant de 600 à 1200 MPa environ.

L'homopolymère ou le copolymère de propylène (notamment le copolymère de propylène de la deuxième variante) peut avoir une température de fusion supérieure à 130°C environ, de préférence supérieure à 140°C environ, et de préférence encore allant de 140 à 165°C environ.

L'homopolymère ou le copolymère de propylène (notamment le copolymère de propylène de la deuxième variante) peut avoir une enthalpie de fusion allant de 30 à 100 J/g environ.

L'homopolymère ou le copolymère de propylène (notamment le copolymère de propylène de la deuxième variante) peut avoir un indice de fluidité allant de 0,5 à 3 g/10 min, mesuré à 230°C environ avec une charge de 2,16 kg environ selon la norme ASTM D1238-00.

Selon une forme de réalisation préférée de l'invention, l'homopolymère ou le copolymère de propylène (notamment le copolymère de propylène de la deuxième variante) représente de 40 % à 70 % en masse par rapport à la masse totale du matériau polymère thermoplastique.

Comme indiqué précédemment, les homo- et copolymères d'éthylène utilisables selon l'invention ont une densité variant de 0,930 à 0,970 g/cm³, et encore plus préférentiellement de 0,940 à 0,965 g/cm³. Ils appartiennent à la catégorie des polyéthylènes dits de « haute densité » ou HDPE selon la norme ISO 1183A (à une température de 23°C). Ainsi, la densité est mesurée selon la norme ISO 1183A (à une température de 23°C).

Le copolymère d'éthylène conforme à l'invention est de préférence un copolymère d'éthylène non polaire qui peut comprendre un comonomère de type alpha-oléfine, notamment en C₃-C₁₂. De préférence, le comonomère de type alpha-oléfine peut être choisi parmi le propylène, le 4-méthyle-1-pentène, le 1-butène, le 1-hexène, le 1-octène. On préférera utiliser comme alpha-oléfine le 1-octène pour former le copolymère d'éthylène et d'octène (PEO) ou le 1-butène pour former un copolymère d'éthylène et de butène.

Typiquement, le copolymère d'éthylène non polaire est obtenu à partir de la copolymérisation de l'éthylène avec ladite alpha-oléfine, en présence d'un catalyseur Ziegler-Natta ou par polymérisation selon un procédé basse pression.

Selon une forme de réalisation préférée de l'invention, le polyéthylène est un homopolymère d'éthylène. À titre d'exemple d'homopolymère d'éthylène particulièrement préféré selon la présente invention, on peut mentionner le polyéthylène vendu sous la dénomination commerciale Eltex® A4009 MFN1325 par la société Ineos et dont la densité est de 0,960 g/cm³ selon la norme ISO 1183A (à une température de 23°C).

Selon une forme de réalisation préférée de l'invention, le polyéthylène utilisable selon l'invention (choisi parmi un homo- ou copolymère d'éthylène) représente de 10 % à 50 % en masse environ, par rapport à la masse totale du matériau polymère thermoplastique.

En plus du polypropylène (i.e. de l'homopolymère ou du copolymère de propylène, notamment celui de la deuxième variante) défini précédemment et du polyéthylène de haute densité, le matériau polymère thermoplastique peut en outre renfermer au moins un homopolymère ou un copolymère d'oléfine a.

L'oléfine a répond de préférence à la formule CH₂=CH-R², dans laquelle R² est un groupe alkyle linéaire ou ramifié ayant de 2 à 12 atomes de carbone, notamment choisi parmi les oléfines suivantes : 1-butène, isobutylène, 1-pentène, 4 méthyl-1-pentène, 1-hexène, 1-octène, 1-décène, 1-dodécène, et un de leurs mélanges. Parmi de telles oléfines a, le 1-hexène et le 1-octène sont préférés.

En plus du polypropylène (i.e. de l'homopolymère ou du copolymère de propylène, notamment celui de la deuxième variante) défini précédemment et du polyéthylène de haute densité, le matériau polymère thermoplastique peut également renfermer en outre un copolymère hétérophasé comprenant une phase thermoplastique de type propylène et une phase élastomère de type copolymère d'éthylène et d'une oléfine a, un polyéthylène ou un de leurs mélanges.

En particulier, la combinaison d'un homopolymère ou d'un copolymère de propylène de la deuxième variante, et d'au moins un copolymère hétérophasé et/ou d'un polyéthylène permet d'obtenir un matériau polymère thermoplastique présentant de bonnes propriétés mécaniques, notamment en termes de module élastique, et électriques.

La phase élastomère du copolymère hétérophasé peut représenter au moins 20% en masse environ, et de préférence au moins 45% en masse environ, par rapport à la masse totale du copolymère hétérophasé.

L'oléfine α de la phase élastomère du copolymère hétérophasé peut être le propylène.

Le polyéthylène peut être un polyéthylène linéaire basse densité. Dans la présente invention, l'expression « polyéthylène basse densité » signifie un polyéthylène ayant une densité allant de 0,91 à 0,925 environ. Cette densité est mesurée selon la norme ISO 1183A (à une température de 23°C).

Selon une forme de réalisation préférée de l'invention, l'homopolymère ou copolymère d'oléfine α et/ou le copolymère hétérophasé et/ou le polyéthylène représentent, indépendamment l'un de l'autre, de 5 % à 50 % en masse environ du matériau polymère thermoplastique.

À titre d'exemple de ce type de polymère, on peut mentionner le copolymère hétérophasé commercialisé par la société Basell Polyolefins sous la référence Adflex® Q 200 F.

Le matériau polymère thermoplastique peut comprendre en outre un ou plusieurs additifs.

Les additifs sont bien connus de l'homme du métier et peuvent être choisis parmi des antioxydants, des agents anti-UV, des agents anti-cuivre, des agents anti-arborescences d'eau.

Le matériau polymère thermoplastique peut typiquement comprendre de 0,01 à 5 % en masse environ, et de préférence de 0,1 à 2 % en masse environ d'additifs, par rapport à la masse totale du matériau polymère thermoplastique.

Plus particulièrement, les antioxydants permettent de protéger la composition polymère des contraintes thermiques engendrées lors des étapes de fabrication du câble ou de fonctionnement du câble.

Les antioxydants sont choisis de préférence parmi les phénols encombrés, les thioesters, les antioxydants à base de soufre, les antioxydants à base de phosphore, les antioxydants de type amine et un de leurs mélanges.

À titre d'exemples de phénols encombrés, on peut citer le pentaérythritol tétrakis(3-(3,5-di-*tert*-butyl-4-hydroxyphényl)propionate) (Irganox® 1010), l'octadécyl 3-(3,5-di-*tert*-butyl-4-hydroxyphényl)propionate (Irganox® 1076), le 1,3,5-triméthyl-2,4,6-tris(3,5-di-*tert*-butyl-4-hydroxybenzyl)benzène (Irganox® 1330), le 4,6-bis (octylthiométhyl)-o-crésol (Irgastab® KV10), le 2,2'-thiobis(6-*tert*-butyl-4-méthylphénol) (Irganox® 1081), le 2,2'-thiodiéthylène bis[3-(3,5-di-*tert*-butyl-4-hydroxyphényl) propionate] (Irganox® 1035), le 2,2'-méthylènebis(6-*tert*-butyl-4-méthylphénol), le 1,2-bis(3,5-di-tert-butyl-4-hydroxyhydrocinnamoyl) hydrazine (Irganox® MD 1024), et le 2,2'-oxamido-bis(éthyl-3(3,5-di-*tert-*butyl-4-hydroxyphényle)propionate).

À titre d'exemples de thioesters, on peut citer le didodécyl-3,3'-thiodipropionate (Irganox® PS800), le distéaryl thiodipropionate (Irganox® PS802) et le 4,6-bis(octylthiométhyle)-o-crésol (Irganox® 1520).

À titre d'exemples d'antioxydants à base de soufre, on peut citer le dioctadecyl-3,3'-thiodipropionate et le didodecyl-3,3'-thiodipropionate.

À titre d'exemples d'antioxydants à base de phosphore, on peut citer le tris(2,4-di-*tert*-butyl-phényle)phosphite (Irgafos® 168) et le bis(2,4-di-*tert-*butylphényl)pentaérythritol diphosphite (Ultranox® 626).

À titre d'exemples d'antioxydants de type amine, on peut citer les phénylène diamines (e.g. 1PPD ou 6PPD), les diphénylamine styrène, les diphénylamines, les mercapto benzimidazoles et le 2,2,4-triméthyl-1,2 dihydroquinoline polymérisé (TMQ).

À titre d'exemples de mélanges d'antioxydants, on peut citer l'Irganox B 225 qui comprend un mélange équimolaire d'Irgafos 168 et d'Irganox 1010 tels que décrits ci-dessus.

Le matériau polymère thermoplastique peut comprendre en outre au moins un liquide diélectrique.

À titre de liquide diélectrique, on peut citer les huiles minérales (e.g. huiles naphténiques, huiles paraffiniques, huiles aromatiques ou huiles polyaromatiques), les huiles végétales (e.g. huile de soja, huile de lin, huile de colza, huile de maïs ou huile de ricin) ou les huiles synthétiques telles que les hydrocarbures aromatiques (alkylbenzènes, alkylnaphtalènes, alkylbiphényles, alkydiaryléthylènes, etc...), les huiles de silicone, les éther-oxydes, les esters organiques ou les hydrocarbures aliphatiques.

Selon un mode de réalisation particulier, le liquide diélectrique représente de 1% à 20% en masse environ, de préférence de 2 à 15% en masse environ, et de préférence encore de 3 à 12% en masse environ, par rapport à la masse totale du matériau polymère thermoplastique.

Dans la présente invention, la couche électriquement isolante du câble conforme à l'invention est non réticulée et extrudée.

La couche électriquement isolante du câble conforme à l'invention peut être obtenue par les procédés d'extrusion classiques et bien connus de l'homme du métier.

La couche électriquement isolante présente une épaisseur variable en fonction du type de câble envisagé. En particulier, lorsque le câble conforme à l'invention est un câble à moyenne tension, l'épaisseur de la couche isolante est typiquement de 4 à 5 mm environ, et plus particulièrement de 4,5 mm environ. Lorsque le câble conforme à l'invention est un câble haute tension, l'épaisseur de la couche isolante varie typiquement de 17 à 18 mm (pour des tensions de l'ordre 150 kV environ) et pour aller jusqu'à des épaisseurs allant de 20 à 25 mm environ pour des tensions supérieures à 150 kV (câbles à très haute tension).

Dans la présente invention, on entend par « couche électriquement isolante » une couche dont la conductivité électrique peut être d'au plus 1.10⁻⁹ S/m, et de préférence d'au plus 1.10⁻¹⁰ S/m (siemens par mètre) (à 25°C).

L'élément électriquement conducteur allongé peut être un conducteur monocorps tel que par exemple un fil métallique ou un conducteur multicorps tel qu'une pluralité de fils métalliques torsadés ou non.

L'élément électriquement conducteur allongé peut être en aluminium, en alliage d'aluminium, en cuivre, en alliage de cuivre, et en un de leurs combinaisons.

Dans la présente invention, on entend par « couche semi-conductrice » une couche dont la conductivité électrique peut être d'au moins 1.10⁻⁹ S/m (siemens par mètre), de préférence d'au moins 1.10⁻³ S/m, et de préférence peut être inférieure à 1.10³ S/m (à 25°C).

Dans un mode de réalisation particulier, la première couche semi conductrice, la couche électriquement isolante et la deuxième couche semi conductrice constituent une isolation tricouche. En d'autres termes, la couche électriquement isolante est en contact physique direct avec la première couche semi-conductrice, et la deuxième couche semi-conductrice est en contact physique direct avec la couche électriquement isolante.

La première et la deuxième couches semi-conductrices sont de préférence en un matériau polymère thermoplastique.

Le câble conforme à la présente invention peut comprendre en outre une gaine électriquement isolante entourant la deuxième couche semi conductrice, et peut être en contact physique direct avec celle-ci.

Le câble conforme à la présente invention peut comprendre en outre un écran métallique entourant la deuxième couche semi-conductrice. Dans ce cas, la gaine électriquement isolante entoure ledit écran métallique.

Cet écran métallique peut être un écran dit « filaire » composé d'un ensemble de conducteurs en cuivre ou en aluminium arrangé autour et le long de la deuxième couche semi-conductrice, un écran dit « rubané » composé d'un ou de plusieurs rubans métalliques conducteurs en cuivre ou en aluminium posé(s) éventuellement en hélice autour de la deuxième couche semi-conductrice ou d'un ruban métallique conducteur en aluminium posé longitudinalement autour de la deuxième couche semi-conductrice et rendu étanche grâce à de la colle dans les zones de chevauchement de parties dudit ruban, ou d'un écran dit « étanche » de type tube métallique composé éventuellement de plomb ou d'alliage de plomb et entourant la deuxième couche semi-conductrice. Ce dernier type d'écran permet notamment de faire barrière à l'humidité ayant tendance à pénétrer le câble d'énergie en direction radiale.

L'écran métallique du câble d'énergie de l'invention peut comprendre un écran dit « filaire » et un écran dit « étanche » ou un écran dit « filaire » et un écran dit « rubané ».

Tous les types d'écrans métalliques peuvent jouer le rôle de mise à la terre du câble d'énergie et peuvent ainsi transporter des courants de défaut, par exemple en cas de court-circuit dans le réseau concerné.

D'autres couches, telles que des couches gonflantes en présence d'humidité peuvent être ajoutées entre la deuxième couche semi-conductrice et l'écran métallique, entre l'écran métallique et la gaine électriquement isolante lorsqu'ils existent, ces couches permettant d'assurer l'étanchéité longitudinale du câble d'énergie à l'eau.

L'invention a pour deuxième objet un procédé de fabrication d'un câble d'énergie à moyenne tension ou à haute tension conforme au premier objet de l'invention et comprenant au moins un élément conducteur électrique allongé, une première couche semi-conductrice entourant l'élément conducteur électrique allongé, une couche électriquement isolante entourant la première couche semi-conductrice, et une deuxième couche semi-conductrice entourant ladite couche électriquement isolante, et dans lequel ladite couche électriquement isolante est au moins une couche d'un matériau polymère thermoplastique comprenant une matrice continue de polypropylène obtenu par polymérisation de type Ziegler-Natta d'au moins un homopolymère ou un copolymère de propylène, et dans laquelle est dispersé un polyéthylène ayant une densité variant de 0,930 à 0,970 g/cm³. Ce procédé comprend les étapes consistant à :
1) extruder et déposer la première couche semi-conductrice autour du conducteur électrique,
2) extruder et déposer la couche électriquement isolante autour de ladite première couche semi-conductrice, et
3) extruder et déposer la deuxième couche semi-conductrice autour de ladite couche électriquement isolante.

Dans une variante, les étapes 1) à 3) peuvent être effectuées concomitamment.

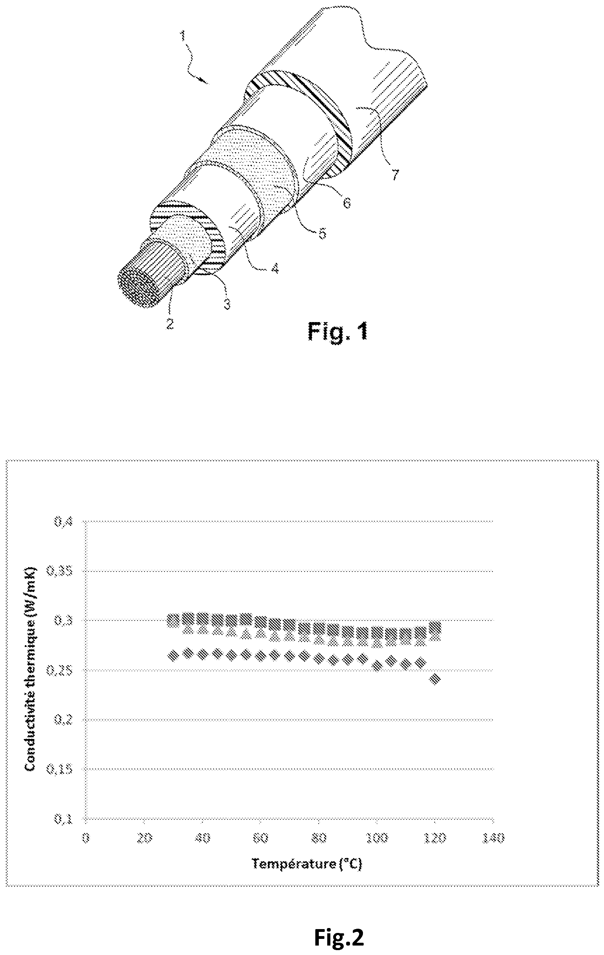

D'autres caractéristiques et avantages de la présente invention apparaîtront à la lumière de la description d'un exemple non limitatif d'un câble électrique selon l'invention fait en référence à la figure 1 représentant une vue schématique en perspective et en coupe d'un câble électrique selon un mode de réalisation préféré conforme à l'invention.

Le câble d'énergie 1 à moyenne ou haute tension, illustré dans la figure 1, comprend un élément conducteur 2 central, notamment en cuivre ou en aluminium, et, successivement et coaxialement comprend autour de cet élément, une première couche semi-conductrice 3 dite « couche semi-conductrice interne », une couche électriquement isolante 4, une deuxième couche semi-conductrice 5 dite « couche semi-conductrice externe », un écran métallique 6 du type tube cylindrique, et une gaine extérieure de protection 7, la couche électriquement isolante 4 étant en un matériau polymère thermoplastique comprenant une matrice continue de polypropylène obtenu par polymérisation de type Ziegler-Natta d'au moins un homopolymère ou un copolymère de propylène, et dans laquelle est dispersé un homo- ou copolymère d'éthylène ayant une densité variant de 0,930 à 0,970 g/cm³.

Les couches 3 et 5 sont des couches extrudées par des procédés bien connus de l'homme du métier.

La présence de l'écran métallique 6 et de la gaine extérieure de protection 7 est préférentielle, mais non essentielle. Cette structure de câble est en tant que telle de type connu et hors du cadre de la présente invention.

### EXEMPLES

### EXEMPLE 1: Préparation d'un matériau polymère thermoplastique utilisable à titre de couche électriquement isolante dans un câble conforme à l'invention et d'un matériau comparatif

On a préparé un matériau polymère thermoplastique conforme à l'invention **(MTP 1)** ainsi qu'un matériau polymère thermoplastique comparatif ne faisant pas partie de la présente invention **(MTP 2),** et dont les compositions sont données dans le tableau 1 ci-après (% en masse) :

**TABLEAU 1**

| **Composants** | **MTP 1** | **MTP 2 (*)** |
|---|---|---|
| Copolymère de propylène statistique | 47 % | 50 % |
| Copolymère de propylène hétérophasé | 9,7 % | 25 % |
| Polyéthylène de haute densité (HDPE) | 20 % | - |
| Polyéthylène linéaire de faible (basse) densité | 23 % | 24,7 % |
| Antioxydant | 0,3 % | 0,3 % |

| | | |
|---|---|---|
| (*) MTP comparatif ne faisant pas partie de l'invention | | |

L'origine des composés du tableau 1 est la suivante :
- Copolymère de propylène statistique commercialisé par la société Borealis sous la référence Bormed® RB 845 MO;
- Copolymère de propylène hétérophasé commercialisé par la société Basell Polyolefins sous la référence Adflex® Q 200 F;
- Polyéthylène de haute densité vendu sous la dénomination commerciale Eltex® A4009 MFN1325 par la société Ineos et dont la densité est de 0,960 g/cm³ selon la norme ISO 1183A (à une température de 23°C) ;
- Polyéthylène linéaire de faible (basse) densité vendu sous la dénomination commerciale LDPE LL 1002 YB par la société ExxonMobil Chemical et dont la densité est de 0,918 g/cm³ selon la norme ISO 1183A (à une température de 23°C).
- Antioxydant commercialisé par la société Ciba sous la référence Irganox® B 225 comprenant un mélange équimolaire d'Irgafos® 168 et d'Irganox® 1010.

Les différents composants des matériaux **MTP 1** et **MTP 2** ont été introduits dans une extrudeuse bi-vis Berstorff et extrudés à une température maximale de 180 à 200°C environ (la vitesse de rotation de la bis-vis de l'extrudeuse étant réglée à 80 tours par minute), puis le matériau a été fondu à 200°C environ.

On a ainsi préparé chacun des matériaux polymères thermoplastiques **MTP 1** et **MTP 2** sous la forme de couches de 1,0 mm d'épaisseur et également de couches de 8,0 mm d'épaisseur pour effectuer les mesures de conductivité thermique.

Ces matériaux **MTP 1** et **MTP 2** ont ensuite été comparés du point de vue de leurs propriétés mécaniques (résistance à la traction/élongation à la rupture avant et après vieillissement, de leur densité, de leur conductivité thermique (à 45°C, 85°C et 95°C) et de leurs propriétés électriques (rigidité diélectrique).

### Propriétés mécaniques :

Les tests de résistance à la traction et d'élongation à la rupture ont été effectués sur les matériaux sous forme de couches de 1 mm d'épaisseur selon la Norme NF EN 60811-1-1, avant et après vieillissement à 135°C pendant 240 heures.

La conductivité thermique des matériaux a été mesurée sur les matériaux sous forme de couches de 8 mm à l'aide d'un appareil commercialisé sous la référence 3345 par la société Instron dans les conditions reportées dans la norme EN 60811-1-1.

La rigidité diélectrique des couches a été mesurée à l'aide d'un dispositif comprenant deux électrodes planes en inox de diamètre 20 mm environ (une électrode sous tension et l'autre à la masse) et une huile diélectrique commercialisée par la société Bluestar Silicones sous la référence Rhodorsil® 604 V 50. Par définition, la rigidité diélectrique est le rapport entre la tension de claquage et l'épaisseur de l'isolant. La tension de claquage a été mesurée à 24°C environ, avec une humidité de 50% environ, en utilisant la méthode de montée en tension par palier. La tension appliquée était une tension alternative de fréquence 50 Hz environ et la vitesse de montée de tension était de 1 kV/s environ jusqu'au claquage. 12 mesures ont été effectuées pour chaque matériau.

Les résultats correspondant à chacun de ces tests sont reportés dans les tableaux 2 (propriétés mécaniques) et 3 (rigidité diélectrique) ci-dessous :

**TABLEAU 2**

| **Propriétés** | **MTP 1** | **MTP 2 (*)** |
|---|---|---|
| Résistance à la traction (MPa) | 18,5 | 19,2 |
| Elongation à la rupture (%) | 503 | 538 |
| Résistance à la traction après vieillissement (MPa) | 19,0 | 19,9 |
| Elongation à la rupture après vieillissement (%) | 499 | 537 |
| Densité (g/cm³) | 0,910 | 0,900 |
| Conductivité thermique à 45 °C (W/mK) | 0,2961 | 0,2670 |
| Conductivité thermique à 85 °C (W/mK) | 0,2925 | 0,2655 |
| Conductivité thermique à 95°C (W/mK) | 0,3111 | 0,2800 |

| | | |
|---|---|---|
| (*) MTP comparatif ne faisant pas partie de l'invention | | |

**TABLEAU 3**

| **Matériau** | Rigidité diélectrique (kV/mm) |
|---|---|
| MTP 1 | 110,17 |
| MTP 2 (*) | 129,25 |

| | |
|---|---|
| (*) MTP comparatif ne faisant pas partie de l'invention | |

L'ensemble de ces résultats montre que l'incorporation d'un polyéthylène de haute densité dans une matrice de polypropylène n'est pas préjudiciable aux propriétés mécaniques du matériau polymère thermoplastique utilisable conformément à l'invention à titre de couche électriquement isolante d'un câble d'énergie moyenne tension ou haute tension, celui-ci conservant de bonnes propriétés mécaniques en termes de résistance à la traction et d'élongation à la rupture, y compris après vieillissement (Tableau 2). L'incorporation d'un polyéthylène de haute densité n'est pas préjudiciable non plus aux propriétés diélectriques de la couche isolante qui conserve une valeur de rigidité diélectrique tout à fait compatible avec l'application envisagée (câbles moyenne tension ou haute tension) (Tableau 3). Par contre, la présence du polyéthylène de haute densité conduit à un matériau thermoplastique ayant une conductivité thermique supérieure à celle d'un matériau polymère thermoplastique dans lequel le polyéthylène est un polyéthylène linéaire de faible densité (Tableau 2).

### EXEMPLE 2 : Préparation d'un matériau polymère thermoplastique utilisable à titre de couche électriquement isolante dans un câble conforme à l'invention et d'un matériau comparatif

On a préparé deux matériaux polymères thermoplastiques conformes à l'invention **(MTP 3** et **MTP 4),** ainsi qu'un matériau polymère thermoplastique comparatif ne faisant pas partie de la présente invention **(MTP 5),** et dont les compositions sont données dans le tableau 4 ci-après (% en masse) :

**TABLEAU 4**

| **Composants** | **MTP 3** | **MTP 4** | **MTP 5 (*)** |
|---|---|---|---|
| Copolymère de propylène statistique | - | - | 56,6 % |
| Copolymère de propylène hétérophasé | 47 % | 47 % | 9,4 % |
| Polyéthylène de haute densité (HDPE) | 47 % | 47 % | - |
| Polyéthylène linéaire de faible (basse) densité | - | - | 24,7 % |
| Antioxydant | 0,3 % | 0,3 % | 0,3 % |
| Liquide diélectrique | 5,7 % | 5,7 % | - |

| | | | |
|---|---|---|---|
| (*) MTP comparatif ne faisant pas partie de l'invention | | | |

L'origine des composés du tableau 4 est la suivante :
- Copolymère de propylène statistique commercialisé par la société Lyondell Basell sous la référence Bormed® RB 845 MO ;
- Copolymère de propylène hétérophasé commercialisé par la société Basell Polyolefins sous la référence Adflex® Q 200 F;
- Polyéthylène de haute densité vendu sous la dénomination commerciale Eltex® A4009 MFN1325 par la société Ineos et dont la densité est de 0,960 g/cm³ selon la norme ISO 1183A à une température de 23°C (MFI=0,9) (pour **MTP 3)** ou sous la dénomination commerciale Eltex® A4020 N1331 par la société Ineos et dont la densité est de 0,952 g/cm³ selon la norme ISO 1183A à une température de 23°C (MFI=2,2) (pour **MTP 4)** ;
- Polyéthylène linéaire de faible (basse) densité vendu sous la dénomination commerciale BPD 3642 par la société Ineos et dont la densité est de 0,92 g/cm³ selon la norme ISO 1183A (à une température de 23°C) ;
- Antioxydant commercialisé par la société Ciba sous la référence Irganox® B 225 comprenant un mélange équimolaire d'Irgafos® 168 et d'Irganox® 1010 ; et
- Liquide diélectrique commercialisé sous la référence Dowtherm RP par la société Dow.

Les différents composants des matériaux **MTP 3, MTP 4** et **MTP 5** ont été introduits dans une extrudeuse bi-vis Berstorff et extrudés à une température maximale de 180 à 200°C environ (la vitesse de rotation de la bis-vis de l'extrudeuse étant réglée à 80 tours par minute), puis le matériau a été fondu à 200°C environ.

On a ainsi préparé chacun des matériaux polymères thermoplastiques **MTP 3, MTP 4** et **MTP 5** sous la forme de couches de 1,0 mm d'épaisseur et également de couches de 8,0 mm d'épaisseur pour effectuer les mesures de conductivité thermique.

Ces matériaux **MTP 3, MTP 4** et **MTP 5** ont ensuite été comparés du point de vue de leurs propriétés mécaniques (résistance à la traction/élongation à la rupture avant et après vieillissement), de leur densité, et de leur conductivité thermique.

### Propriétés mécaniques :

Les tests de résistance à la traction et d'élongation à la rupture ont été effectués sur les matériaux sous forme de couches de 1 mm d'épaisseur selon la Norme NF EN 60811-1-1, avant et après vieillissement à 135°C pendant 240 heures.

La conductivité thermique des matériaux a été mesurée sur les matériaux sous forme de couches de 8 mm à l'aide d'un appareil commercialisé sous la référence 3345 par la société Instron dans les conditions reportées dans la norme EN 60811-1-1.

Les résultats correspondant à chacun de ces tests sont reportés dans le tableau 5 (propriétés mécaniques) ci-dessous :

**TABLEAU 5**

| **Propriétés** | **MTP 3** | **MTP 4** | **MTP 5 (*)** |
|---|---|---|---|
| Résistance à la traction (MPa) | 15,1 | 14,3 | 19,1 |
| Elongation à la rupture (%) | 754 | 813 | 679 |
| Résistance à la traction après vieillissement (MPa) | 13,2 | 12 | 17,6 |
| Elongation à la rupture après vieillissement (%) | 543 | 576 | 492 |
| Densité (g/cm³) | 0,900 | 0,898 | 0,904 |

| | | | |
|---|---|---|---|
| (*) MTP comparatif ne faisant pas partie de l'invention | | | |

L'ensemble de ces résultats montre que l'incorporation d'un polyéthylène de haute densité dans une matrice de polypropylène n'est pas préjudiciable aux propriétés mécaniques du matériau polymère thermoplastique utilisable conformément à l'invention à titre de couche électriquement isolante d'un câble d'énergie moyenne tension ou haute tension, celui-ci conservant de très bonnes propriétés mécaniques (voire de meilleures propriétés mécaniques) en termes de résistance à la traction et d'élongation à la rupture, y compris après vieillissement (Tableau 5).

Les résultats de conductivité thermique de **MTP 3** (courbe avec les carrés pleins), **MTP 4** (courbe avec les triangles pleins) et **MTP 5** (courbe avec les losanges pleins) sont reportés sur la figure 2. La présence du polyéthylène de haute densité conduit à un matériau thermoplastique ayant une conductivité thermique supérieure à celle d'un matériau polymère thermoplastique dans lequel le polyéthylène est un polyéthylène linéaire de faible densité.

## Revendications

1. Câble d'énergie à moyenne tension ou à haute tension comprenant au moins un élément conducteur électrique allongé, une première couche semi-conductrice entourant l'élément conducteur électrique allongé, une couche électriquement isolante entourant la première couche semi-conductrice, et une deuxième couche semi-conductrice entourant ladite couche électriquement isolante, ledit câble d'énergie étant **caractérisé en ce que** la couche électriquement isolante est au moins une couche d'un matériau polymère thermoplastique comprenant une matrice continue de polypropylène obtenu par polymérisation de type Ziegler-Natta d'au moins un homopolymère ou un copolymère de propylène, et dans laquelle est dispersé un polyéthylène choisi parmi un homo- ou copolymère d'éthylène ayant une densité variant de 0,930 à 0,970 g/cm³, la densité étant mesurée selon la norme ISO 1183A à une température de 23°C.

2. Câble selon la revendication 1, **caractérisé en ce que** le copolymère de polypropylène est un copolymère statistique de propylène.

3. Câble selon la revendication 1 ou 2, **caractérisé en ce que** le copolymère de polypropylène est choisi parmi les copolymères de propylène et d'oléfine, l'oléfine étant choisie parmi l'éthylène et une oléfine α différente du propylène.

4. Câble selon l'une quelconque des revendications précédentes, **caractérisé en ce que** le copolymère de propylène est un copolymère de propylène et d'éthylène.

5. Câble selon la revendication 1, **caractérisé en ce que** le copolymère de propylène est un copolymère hétérophasé comprenant une phase thermoplastique de type propylène et une phase élastomère de type copolymère d'éthylène et d'une oléfine α

6. Câble selon l'une quelconque des revendications précédentes, **caractérisé en ce que** l'homopolymère ou copolymère de propylène représente de 40 % à 70 % en masse par rapport à la masse totale du matériau polymère thermoplastique.

7. Câble selon l'une quelconque des revendications précédentes, **caractérisé en ce que** l'homo- ou copolymères d'éthylène a une densité variant de 0,940 à 0,965 g/cm³

8. Câble selon l'une quelconque des revendications précédentes, **caractérisé en ce que** le polyéthylène est un homopolymère d'éthylène.

9. Câble selon l'une quelconque des revendications 1 à 7, **caractérisé en ce que** le polyéthylène est un copolymère d'éthylène non polaire pouvant comprendre un comonomère de type alpha-oléfine.

10. Câble selon l'une quelconque des revendications précédentes, **caractérisé en ce que** le polyéthylène représente de 10 % à 50 % en masse, par rapport à la masse totale du matériau polymère thermoplastique.

11. Câble selon l'une quelconque des revendications précédentes, **caractérisé en ce que** le matériau polymère thermoplastique renferme en outre au moins un homopolymère ou un copolymère d'oléfine a.

12. Câble selon l'une quelconque des revendications précédentes, **caractérisé en ce que** le matériau polymère thermoplastique renferme en outre un copolymère hétérophasé comprenant une phase thermoplastique de type propylène et une phase élastomère de type copolymère d'éthylène et d'une oléfine a, un polyéthylène ou un de leurs mélanges.

13. Câble selon la revendication 11 ou 12, **caractérisé en ce que** l'homopolymère ou copolymère d'oléfine α et/ou le polymère hétérophasé et/ou le polyéthylène représentent, indépendamment l'un de l'autre, de 5 % à 50 % en masse du matériau polymère thermoplastique.

14. Câble selon l'une quelconque des revendications précédentes, **caractérisé en ce que** le matériau polymère thermoplastique comprend en outre au moins un liquide diélectrique.

15. Procédé de préparation d'un câble d'énergie à moyenne tension ou haute tension tel que défini à l'une quelconque des revendications 1 à 14, et comprenant au moins un élément conducteur électrique allongé, une première couche semi-conductrice entourant l'élément conducteur électrique allongé, une couche électriquement isolante entourant la première couche semi-conductrice, et une deuxième couche semi-conductrice entourant ladite couche électriquement isolante, et dans lequel ladite couche électriquement isolante est au moins une couche d'un matériau polymère thermoplastique comprenant une matrice continue de polypropylène obtenu par polymérisation de type Ziegler-Natta d'au moins un homopolymère ou un copolymère de propylène, et dans laquelle est dispersé un polyéthylène ayant une densité variant de 0,930 à 0,970 g/cm³, ledit procédé comprenant les étapes consistant à :
1) extruder et déposer la première couche semi-conductrice autour du conducteur électrique,
2) extruder et déposer la couche électriquement isolante autour de ladite première couche semi-conductrice, et
3) extruder et déposer la deuxième couche semi-conductrice autour de ladite couche électriquement isolante.

## Patentansprüche

1. Mittel- oder Hochspannungsstromkabel, umfassend mindestens ein längliches elektrisch leitendes Element, eine erste halbleitende Schicht, die das längliche elektrisch leitende Element umgibt, eine elektrisch isolierende Schicht, die die erste halbleitende Schicht umgibt, und eine zweite halbleitende Schicht, die die elektrisch isolierende Schicht umgibt, wobei das Stromkabel **dadurch gekennzeichnet ist, dass** die elektrisch isolierende Schicht mindestens eine Schicht aus einem thermoplastischen Polymermaterial ist, die eine kontinuierliche Matrix aus Polypropylen umfasst, erhalten durch Polymerisation vom Typ Ziegler-Natta von mindestens einem Polypropylen-Homopolymer oder einem Polypropylen-Copolymer, und in der ein Polyethylen verteilt ist, das aus einem Ethylen-Homo- oder -Copolymer mit einer Dichte ausgewählt ist, die von 0,930 bis 0,970 g/cm³ schwankt, wobei die Dichte nach der Norm ISO 1183A bei einer Temperatur von 23 °C gemessen wird.

2. Kabel nach Anspruch 1, **dadurch gekennzeichnet, dass** das Polypropylen-Copolymer ein statistisches Propylen-Copolymer ist.

3. Kabel nach Anspruch 1 oder 2, **dadurch gekennzeichnet, dass** das Polypropylen-Copolymer aus den Propylen- und Olefin-Copolymeren ausgewählt ist, wobei das Olefin aus den Ethylen und einem α-Olefin ausgewählt ist, das sich von dem Propylen unterscheidet.

4. Kabel nach einem der vorangehenden Ansprüche, **dadurch gekennzeichnet, dass** das Propylen-Copolymer ein Propylen- und Ethylen-Copolymer ist.

5. Kabel nach Anspruch 1, **dadurch gekennzeichnet, dass** das Propylen-Copolymer ein heterophasisches Copolymer ist, das eine thermoplastische Phase vom Typ Propylen und eine Elastomerphase vom Typ Ethylen-Copolymer und eines α-Olefins umfasst.

6. Kabel nach einem der vorangehenden Ansprüche, **dadurch gekennzeichnet, dass** das Propylen-Homopolymer oder Propylen-Copolymer 40 bis 70 Ma% in Bezug auf die Gesamtmasse des thermoplastischen Polymermaterials darstellt.

7. Kabel nach einem der vorangehenden Ansprüche, **dadurch gekennzeichnet, dass** das Ethylen-Homo- oder Copolymer eine Dichte hat, die von 0,940 bis 0,965 g/cm³ schwankt.

8. Kabel nach einem der vorangehenden Ansprüche, **dadurch gekennzeichnet, dass** das Polyethylen ein Ethylen-Homopolymer ist.

9. Kabel nach einem der Ansprüche 1 bis 7, **dadurch gekennzeichnet, dass** das Polyethylen ein nicht polares Ethylen-Copolymer ist, das ein Comonomer vom Typ Alpha-Olefin umfassen kann.

10. Kabel nach einem der vorangehenden Ansprüche, **dadurch gekennzeichnet, dass** das Polyethylen 10 bis 50 Ma% in Bezug auf die Gesamtmasse des thermoplastischen Polymermaterials darstellt.

11. Kabel nach einem der vorangehenden Ansprüche, **dadurch gekennzeichnet, dass** das thermoplastische Polymermaterial ferner mindestens ein α-Olefin-Homopolymer oder ein α-Olefin-Copolymer einschließt.

12. Kabel nach einem der vorangehenden Ansprüche, **dadurch gekennzeichnet, dass** das thermoplastische Polymermaterial ferner ein heterophasisches Copolymer einschließt, das eine thermoplastische Phase vom Typ Propylen und eine Elastomerphase vom Typ Ethylen-Copolymer und eines α-Olefins, ein Polyethylen oder eins ihrer Gemische einschließt.

13. Kabel nach Anspruch 11 oder 12, **dadurch gekennzeichnet, dass** das α-Olefin-Homopolymer oder α-Olefin-Copolymer und/oder das heterophasische Polymer und/oder das Polyethylen unabhängig voneinander 5 bis 50 Ma% des thermoplastischen Polymermaterials darstellen.

14. Kabel nach einem der vorangehenden Ansprüche, **dadurch gekennzeichnet, dass** das thermoplastische Polymermaterial ferner mindestens eine dielektrische Flüssigkeit umfasst.

15. Verfahren zur Herstellung eines Mittel- oder Hochspannungsstromkabels nach einem der Ansprüche 1 bis 14, umfassend mindestens ein längliches elektrisch leitendes Element, eine erste halbleitende Schicht, die das längliche elektrisch leitende Element umgibt, eine elektrisch isolierende Schicht, die die erste halbleitende Schicht umgibt, und eine zweite halbleitende Schicht, die die elektrisch isolierende Schicht umgibt, und wobei die elektrisch isolierende Schicht mindestens eine Schicht eines thermoplastischen Polymermaterials ist, das eine kontinuierliche Matrix aus Polypropylen umfasst, das durch Polymerisation vom Typ Ziegler-Natta mindestens eines Propylen-Homopolymers oder eines Propylen-Copolymers erhalten wird, und in der ein Polyethylen mit einer Dichte verteilt ist, die von 0,930 bis 0,970 g/cm³ schwankt, wobei das Verfahren die folgenden Schritte umfasst:
1) Extrudieren und Aufbringen der ersten halbleitenden Schicht um den elektrischen Leiter,
2) Extrudieren und Aufbringen der elektrisch isolierenden Schicht um die erste halbleitende Schicht, und
3) Extrudieren und Aufbringen der zweiten halbleitenden Schicht um die elektrisch isolierende Schicht.

## Claims

1. A medium or high voltage power cable comprising at least one elongate electrically conductive element, a first semiconductor layer surrounding the elongate electrically conductive element, an electrically insulating layer surrounding the first semiconductor layer, and a second semiconductor layer surrounding said electrically insulating layer, said power cable being **characterized in that** the electrically insulating layer is at least one layer of a thermoplastic polymer material comprising a continuous matrix of polypropylene obtained by polymerisation of Ziegler-Natta type of at least one homopolymer or copolymer of propylene, and in which there is dispersed a polyethylene selected from among a homo- or copolymer of ethylene having density varying from 0.930 to 0.970 g/cm³, the density being measured in accordance with standard ISO 1183 A at a temperature of 23 °C.

2. The cable according to claim 1, **characterized in that** the polypropylene copolymer is a statistical copolymer of propylene.

3. The cable according to claim 1 or 2, **characterized in that** the polypropylene copolymer is selected from among the copolymers of propylene and olefin, the olefin being selected from among ethylene and an α-olefin differing from the propylene.

4. The cable according to any of the preceding claims, **characterized in that** the propylene copolymer is a copolymer of propylene and ethylene.

5. The cable according to claim 1, **characterized in that** the propylene copolymer is a heterophasic copolymer comprising a thermoplastic phase of propylene type and an elastomer phase of the type of an ethylene and α-olefin copolymer.

6. The cable according to any of the preceding claims, **characterized in that** the homopolymer or copolymer of propylene represents from 40 to 70 weight % of the total weight of the thermoplastic polymer material.

7. The cable according to any of the preceding claims, **characterized in that** the homo- or copolymers of ethylene have a density varying from 0.940 to 0.965 g/cm³.

8. The cable according to any of the preceding claims, **characterized in that** the polyethylene is a homopolymer of ethylene.

9. The cable according to any of claims 1 to 7, **characterized in that** the polyethylene is a copolymer of non-polar ethylene possibly comprising a comonomer of alpha-olefin type.

10. The cable according to any of the preceding claims, **characterized in that** the polyethylene represents from 10 to 50 weight % of the total weight of the thermoplastic polymer material.

11. The cable according to any of the preceding claims, **characterized in that** the thermoplastic polymer material also contains at least one homopolymer or copolymer of α-olefin.

12. The cable according to any of the preceding claims, **characterized in that** the thermoplastic polymer material also contains a heterophasic copolymer comprising a thermoplastic phase of propylene type and an elastomer phase of the type of an ethylene and α-olefin copolymer, a polyethylene or one of the mixtures thereof.

13. The cable according to claim 11 or 12, **characterized in that** the homopolymer or copolymer of α-olefin and/or the heterophasic polymer and/or the polyethylene each independently represent from 5 to 50 weight % of the thermoplastic polymer material.

14. The cable according to any of the preceding claims, **characterized in that** the thermoplastic polymer material also contains at least one dielectric liquid.

15. A method for preparing a medium or high voltage power cable such as defined in any of claims 1 to 14, and comprising at least one elongate electrically conductive element, a first semiconductor layer surrounding the elongate electrically conductive element, an electrically insulating layer surrounding the first semiconductor layer, and a second semiconductor layer surrounding said electrically insulating layer, and wherein said electrically insulating layer is at least one layer of a thermoplastic polymer material comprising a continuous matrix of polypropylene obtained by polymerisation of Ziegler-Natta type of at least one homopolymer or copolymer of propylene, and in which there is dispersed a polyethylene having a density varying from 0.930 to 0.970 g/cm³, said method comprising the steps of:
1) extruding and depositing the first semiconductor layer around the electrical conductor;
2) extruding and depositing the electrically insulating layer around said first semiconductor layer; and
3) extruding and depositing the second semiconductor layer around said electrically insulating layer.
